# EUROPEAN PATENT SPECIFICATION

(11) **EP 4 662 252 B1**
(45) Date of publication and mention of the grant of the patent: **16.09.2026**
(21) Application number: 24701888.0
(22) Date of filing: 23.01.2024
(51) Int. Cl.: C08F 14/26, C08F 214/26, C08F 2/16, C08F 2/22, C08F 2/38, C08F 216/14

(54) **METHOD FOR MANUFACTURING FLUOROELASTOMERS**
VERFAHREN ZUR HERSTELLUNG VON FLUORELASTOMEREN
PROCÉDÉ DE FABRICATION DE FLUOROÉLASTOMÈRES

(30) Priority: 06.02.2023 EP 23155071
(43) Date of publication of application: 17.12.2025
(73) Proprietor: Syensqo Specialty Polymers Italy S.p.A., 20021 Bollate (MI) (IT)
(72) Inventor: MARRANI, Alessio, 20021 Bollate (MI) (IT); IEVA, Eliana, 15122 SPINETTA MARENGO (AL) (IT); MILLEFANTI, Stefano, 20021 Bollate (MI) (IT); SCIARRILLO, Viviana, 20021 Bollate (MI) (IT)
(74) Representative: Briatore, Andrea
(86) International application number: PCT/EP2024/051565
(87) International publication number: WO 2024/165313

(56) References cited:
- EP-A1- 1 178 058
- US-A1- 2010 160 531

## Description

### Technical Field

This application claims priority from the European Patent Application 23155071.6 filed on 2023-02-06, the whole content of this application being incorporated herein by reference for all purposes.

The present invention relates to a method for manufacturing fluoroelastomers, notably tetrafluoroethylene (TFE) based fluoroelastomers, in mild pressure conditions wherein no addition of fluorosurfactants is required, and wherein a very stable fluoropolymer latex can be obtained.

### Background Art

Vulcanized fluoroelastomers have been used in a variety of applications, in particular for manufacturing sealing articles such as oil seals, gaskets, shaft seals and O-rings, because of several desirable properties such as heat resistance, chemical resistance, weatherability, etc.

A frequently used method for manufacturing curable fluoroelastomers, involves aqueous emulsion polymerization of one or more fluorinated monomers. This type of polymerization is generally carried out in the presence of fluorinated surfactants, which are required for ensuring latex stability, increasing kinetics, and avoiding build-up or fouling of the reactors.

For example, US 2007/0100062 **(DuPont Performance Elastomers L.L.C.)** discloses fluoroelastomers prepared by emulsion polymerization. While it is broadly disclosed that surfactants are optional ingredients, all the examples requires the use of a fluorinated surfactant (eg., perfluoro hexyl ethyl sulfonic acid). More recently, because of increasing concerns related the use of fluorinated surfactants, reactions requiring non fluorinated surfactants have been disclosed in the art, for example in US 2018/0237628 and US 2018/0148527 (both in the name of **Asahi Glass Company, Limited** and describing TFE based fluoroelastomers).

When targeting manufacture of stable latexes of TFE based fluoroelastomers in the absence of added fluorinated surfactants, the current state of the art still does not provide for methods of making such fluoroelastomers as latexes having outstanding stability.

Now, surprisingly, the Applicant found that this problem can be effectively solved by the method of the present invention. Such method also allows obtaining stable fluoroelastomer latexes, which are easier to handle and which are free from fluorinated surfactants both during manufacturing and in the final product in latex or solid form.

### Summary of the invention

The present invention relates to A method of making a fluoroelastomer [fluoroelastomer A] in an aqueous reaction medium free from fluorinated surfactants said method comprising:
a: forming a mixture comprising:
   i) water
   ii) one or more fluorinated solvent, having less than 0.1 mmoles of ionic functional groups per kg of solvent , and preferably being free from ionic functional groups,
   iii) a free-radical initiator,
   iv) monomers comprising tetrafluoroethylene (TFE) and one or more perlfuoroalkyvinylether (PAVE) ,
   v) optionally one or more chain transfer agent;
b: initiating the polymerization of said monomers, thereby forming a fluoroelastomer [fluoroelastomer A] as a stable latex,
wherein:
- said mixture is free from fluorinated surfactants
- the weight ratio between said one or more fluorinated solvent and said water is from 0.1 to 10,
- said fluoroelastomer A comprises 30-85% by moles of recurring units derived from tetrafluoroethylene, and 5-50% by moles of recurring units derived from one or more PAVE.

In another aspect the present invention relates to an aqueous latex, free from fluorinated surfactants, comprising one or more fluorinated solvent having less than 0.1 mmoles of ionic functional groups per kg of solvent , and particles of a fluoroelastomer A, wherein said particles of fluoroelastomer A have an average particle size, measured according to ISO 13321, below 800nm and wherein:
- the weight ratio between said one or more fluorinated solvent and said water is from 0.1 to 10, preferably from 0,2 to 5, more preferably from 0.3 to 1, even more preferably from 0.5 to 0.8,
and wherein said fluoroelastomer A:
- comprises 30-85%, preferably 35-75%, more preferably 40-70%, even more preferably 45-65% by moles of recurring units derived from tetrafluoroethylene, and 5-50%, preferably 10-45%, more preferably 15-40%, even more preferably 20-35% by moles of recurring units derived from one or more PAVE
- possesses a Mooney viscosity (ML1+10 (121°C)) of at least 10 MU,
- comprises -CH2OH chain ends in an amount of zero to less than 10 mmol/kg of fluoroelastomer A, preferably less than 5 mmol/kg of fluoroelastomer A.

### Description of embodiments

For the purposes of the present description and of the following claims:
- the use of parentheses around symbols or numbers identifying the formulae, for example in expressions like "fluoroelastomer (A)", etc., has the mere purpose of better distinguishing the symbol or number from the rest of the text and, hence, said parenthesis can also be omitted;
- the expression "essentially consists of", when used in combination with repeat units of fluoroelastomer A, is intended to indicate that minor amounts of end chains, defects, irregularities and monomer rearrangements are tolerated in fluoroelastomer A, provided that their amount is below 5 moles% based on the total moles of the fluoroelastomer A, more preferably below 2 moles%, even more preferably below 1 moles%;
- the term "fluoroelastomer" is intended to indicate essentially amorphous polymer(s), preferably having a low degree of crystallinity (having a heat of fusion of less than 5 J/g, preferably of less than 3 J/g, more preferably of less than 1 J/g, as measured by ASTM D-3418) and a glass transition temperature (Tg) below room temperature, as measured by ASTM D-3418. The fluoroelastomer has advantageously a Tg below 10°C, preferably below 5°C, more preferably below 0°C;
- the expressions "fluorinated surfactant" "fluorinated monomer", are intended to encompass partially and fully fluorinated compounds, unless otherwise specified.

The method of the present invention is suitable to prepare, in mild pressure conditions and in a fluorosurfactant free environment, fluoroelastomers (A) having 30-85%, preferably 35-75%, more preferably 40-70%, even more preferably 45-65% by moles of recurring units derived from tetrafluoroethylene **(TFE),** and 5-50%, preferably 10-45%, more preferably 15-40%, even more preferably 20-35% by moles of recurring units derived from one or more perfluoroalkylvinylether **(PAVE).**

Perlfuoroalkyvinylether (PAVE) monomers suitable for the present invention have the general formula:

(I) CF₂=CFOR_{f},

wherein R_{f} is a C1-C6 (per)fluoroalkyl group, e.g. -CF₃, -C₂F₅, -C₃F₇, preferably R_{f} is selected from -CF₃ and -C₂F₅, more preferably is -CF₃.

In addition to TFE and PAVE the fluoroelastomers of the present invention may optionally comprise 1-50% by moles of recurring units derived from other fluorinated monomers different from TFE and PAVE, non limitative examples of suitable fluorinated monomers are notably:
(a) C2-C8 perfluorinated fluoroolefins, different from TFE such as hexafluoropropylene (HFP);
(b) hydrogen-containing C2-C8 olefins , such as vinylidene fluoride (VDF) vinyl fluoride (VF), trifluoroethylene (TrFE), perfluoroalkyl ethylenes of formula CH₂=CH-R_{f}, wherein R_{f} is a C1-C6 perfluoroalkyl group;
(c) C2-C8 chloro and/or bromo and/or iodo-fluoroolefins such as chlorotrifluoroethylene (CTFE);
(d) (per)fluoro-oxy-alkylvinylethers of formula CF₂=CFOX, wherein X is a C₁-C₁₂ [(per)fluoro]-oxyalkyl comprising catenary oxygen atoms, e.g. the perfluoro-2-propoxypropyl group;
(e) (per)fluorodioxoles having formula : 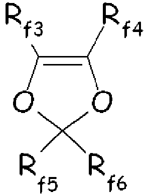 wherein R_{f3}, R_{f4}, R_{f5}, R_{f6}, equal or different from each other, are independently selected among fluorine atoms and C₁-C₆ (per)fluoroalkyl groups, optionally comprising one or more than one oxygen atom, such as notably -CF₃, -C₂F₅, - C₃F₇, -OCF₃, -OCF₂CF₂OCF₃; preferably, perfluorodioxoles;
(f) (per)fluoro-methoxy-vinylethers (MOVE, hereinafter) having formula: CFX₂=CX₂OCF₂OR"_{f} wherein R"_{f} is selected among linear or branched C₁-C₆ (per)fluoroalkyls; C₅-C₆ cyclic (per)fluoroalkyls; and C₂-C₆ (per)fluorooxyalkyls, linear or branched, comprising from 1 to 3 catenary oxygen atoms, and X₂ = F, H; preferably X₂ is F and R"_{f} is -CF₂CF₃ (MOVE1); -CF₂CF₂OCF₃ (MOVE2); or -CF₃ (MOVE3).

Fluoroelastomer A may comprise, in addition to fluorinated recurring units mentioned above one or more of the followings:
- recurring units derived from at least one bis-olefin [bis-olefin (OF)] having general formula : 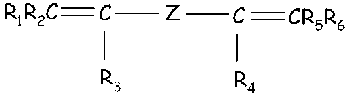 wherein R₁, R₂, R₃, R₄, R₅ and R₆, equal or different from each other, are H, a halogen, or a C1-C5 optionally halogenated group, possibly comprising one or more oxygen group; Z is a linear or branched C1-C18 optionally halogenated alkylene or cycloalkylene radical, optionally containing oxygen atoms, or a (per)fluoropolyoxyalkylene radical;
- recurring units derived from at least one hydrogenated monomer,
- recurring units derived from one or more cure sites containing monomers.

Examples of hydrogenated monomers which can be used herein are notably non-fluorinated alpha-olefins, including ethylene, propylene, 1-butene, diene monomers, styrene monomers, alpha-olefins being typically used. C2-C8 non-fluorinated alpha-olefins (Ol), and more particularly ethylene (E) and propylene (F), will be selected for achieving increased resistance to bases.

The bis-olefin (OF) is preferably selected from the group consisting of those complying with formulae (OF-1), (OF-2) and (OF-3) :
(OF-1) 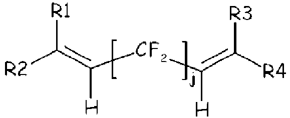 wherein j is an integer between 2 and 10, preferably between 4 and 8, and R₁, R₂, R₃, R₄, equal or different from each other, are H, F or C₁₋₅ alkyl or (per)fluoroalkyl group; a preferred bis-olefin of (OF-1) type is H₂C=CH-(CF₂)₆-CH=CH₂.
(OF-2) 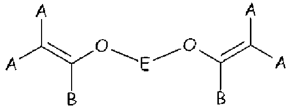 wherein
   each of A, equal or different from each other and at each occurrence, is independently selected from F, Cl, and H;
   each of B, equal or different from each other and at each occurrence, is independently selected from F, Cl, H and OR_{B}, wherein R_{B} is a branched or straight alkyl chain, which can be partially, substantially or completely fluorinated or chlorinated;
   E is a divalent group having 2 to 10 carbon atom, optionally fluorinated, which may be inserted with ether linkages; preferably E is a -(CF₂)ₘ- group, with m being an integer from 3 to 5;
   a preferred bis-olefin of (OF-2) type is F₂C=CF-O-(CF₂)₅-O-CF=CF₂.
(OF-3) 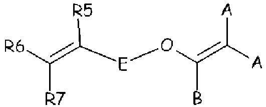 wherein E, A and B have the same meaning as above defined; R₅, R₆, R₇, equal or different from each other, are H, F or C₁₋₅ alkyl or (per)fluoroalkyl group.

When one or more bis-olefin is employed, the resulting fluoroelastomer A typically comprises from 0.01% to 5% by moles of units deriving from one or more bis-olefin with respect to the total amount of units of said fluoroelastomer A.

Optionally, said fluoroelastomer A may comprise cure-site containing recurring units, i.e. units derived from cure site containing monomers.

Among cure-site containing recurring units, mention can be notably made of: (CSM-1) iodine or bromine containing monomers of formula: 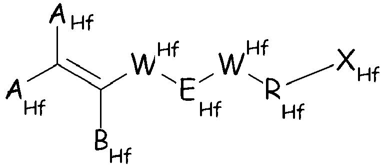 wherein each of A_{Hf}, equal to or different from each other and at each occurrence, is independently selected from F, Cl, and H; B_{Hf} is any of F, Cl, H and OR^{Hf}_{B}, wherein R^{Hf}_{B} is a branched or straight chain alkyl radical which can be partially, substantially or completely fluorinated or chlorinated; each of W^{Hf} equal to or different from each other and at each occurrence, is independently a covalent bond or an oxygen atom; E_{Hf} is a divalent group having 2 to 10 carbon atom, optionally fluorinated; R_{Hf} is a branched or straight chain alkyl radical, which can be partially, substantially or completely fluorinated; and R_{Hf} is a halogen atom selected from the group consisting of Iodine and Bromine; which may be inserted with ether linkages; preferably E is a -(CF₂)ₘ- group, with m being an integer from 3 to 5;
(CSM-2) ethylenically unsaturated compounds comprising cyanide groups, possibly fluorinated.

Among cure-site containing monomers of type (CSM1), preferred monomers are those selected from the group consisting of: (CSM1-A) iodine-containing perfluorovinylethers of formula: 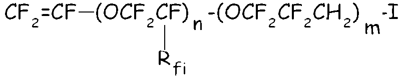 with m being an integer from 0 to 5 and n being an integer from 0 to 3, with the provision that at least one of m and n is different from 0, and Rfi being F or CF₃; (as notably described in patents US4745165 (AUSIMONT S.P.A.) US4564662 (MINNESOTA MINING) and EP199138 A (DAIKIN IND., LTD.); and
(CSM-1B) iodine-containing ethylenically unsaturated compounds of formula:

   CX1X2=CX3-(CF₂CF₂)ₚ-I

   wherein each of X1, X2 and X3, equal to or different from each other, are independently H or F; and p is an integer from 1 to 5; among these compounds, mention can be made of CH₂=CHCF₂CF₂I, I(CF₂CF₂)₂CH=CH₂, ICF₂CF₂CF=CH₂, I(CF₂CF₂)₂CF=CH₂;
(CSM-1C) iodine-containing ethylenically unsaturated compounds of formula:

   CHR=CH-Z-CH₂CHR-I

   wherein R is H or CH₃, Z is a C1-C18 (per)fluoroalkylene radical, linear or branched, optionally containing one or more ether oxygen atoms, or a (per)fluoropolyoxyalkylene radical; among these compounds, mention can be made of CH₂=CH-(CF₂)₄CH₂CH₂I, CH₂=CH-(CF₂)₆CH₂CH₂I, CH₂=CH-(CF₂)₃CH₂CH₂I, CH₂=CH-(CF₂)₂CH₂CH₂I;
(CSM-1D) bromo and/or iodo alpha-olefins containing from 2 to 10 carbon atoms such as bromotrifluoroethylene or bromotetrafluorobutene described, for example, in US 4035565 (DU PONT) or other compounds bromo and/or iodo alpha-olefins disclosed in US 4694045 (DU PONT) .

Among cure-site containing monomers of type (CSM2), preferred monomers are those selected from the group consisting of:
(CSM2-A) perfluorovinyl ethers containing cyanide groups of formula CF₂=CF-(OCF₂CFX^{CN})ₘ-O-(CF₂)ₙ-CN, with X^{CN} being F or CF₃, m being 0, 1, 2, 3 or 4; n being an integer from 1 to 12;
(CSM2-B) perfluorovinyl ethers containing cyanide groups of formula CF₂=CF-(OCF₂CFX^{CN})_{m'}-O-CF₂-CF(CF₃)-CN, with X^{CN} being F or CF₃, m' being 0, 1, 2, 3 or 4.

Specific examples of cure-site containing monomers of type CSM2-A and CSM2-B suitable to the purposes of the present invention are notably those described in patents US 4281092 (DU PONT) , US 5447993 (DU PONT) and US 5789489 (DU PONT).

When one or more cure site containing monomer is employed, the resulting fluoroelastomer A typically comprises from 0.01% to 5% by moles of units deriving from the one or more cure site containing monomer with respect to the total amount of units of said fluoroelastomer A.

Even more preferably fluoroelastomer (A) has iodine and/or bromine chain ends, and does not comprise cure site containing monomers as the iodine/bromine chain ends typically derive from chain transfer agents (as explained below) and already provide for effective cure site for crosslinking.

The method of the present invention includes a step wherein an mixture is formed comprising:
i) water,
ii) one or more fluorinated solvent having less than 0.1 mmoles of ionic functional groups per kg of solvent and more preferably being free from ionic functional groups,
iii) a free-radical initiator
iv) monomers comprising monomers comprising tetrafluoroethylene (TFE) and one or more perlfuoroalkyvinylether (PAVE)
v) optionally one or more chain transfer agent,
wherein:
- said mixture is free from fluorinated surfactants
- the weight ratio between said one or more fluorinated solvent and said water is from 0.1 to 10, preferably from 0,2 to 5, more preferably from 0.3 to 1, even more preferably from 0.5 to 0.8.

An essential component of the aqueous mixture of the present invention is one or more fluorinated solvent having less than 0.1 mmoles of ionic functional groups per kg of solvent and preferably being free from ionic functional groups.

For "ionic functional groups" are intended all functional groups which are ionic or which can be made ionic trough pH change in the range 1-14 such as in particular sulfate, sulfonate, carboxylate, phosphate, phosphonate, ammonium. In other words functional groups are considered "ionic" both if they are present in their salt form (e.g -COO⁻), and/or in their conjugated acid/basic form (e.g. - COOH).

For use in the present invention the fluorinated solvent used must have a very low level of ionic groups, of less than 0,1 mmoles per kg of solvent, preferably the fluorinated solvent is free from ionic groups. Such fluorinated solvents have been found to be very effective in providing effective and fast polymerization of the fluoroelastomers in the method of the invention and, surprisingly, despite not being miscible with water, to form a stable latex at the end of the polymerization process. It has been observed that, in the initial stage of polymerization, water and solvent form two separate phases, but, surprisingly, as the polymerization reaction proceeds and the fluoroelastomer is formed, a uniform stable latex is formed showing no separation. Without being bound to theory it is believed that the polymer latex particles, while dispersed in the water phase, absorb the fluorinated solvent until a separate solvent phase disappears thus forming a uniform stable latex.

Aside from the required low number of ionic groups the choice of fluorinated solvent is not particularly limited. Among partially fluorinated solvents hydrofluoroethers can be used such as those marketed by 3M under the brand name of Novec^{®}. However partially fluorinated solvents may give rise to undesired chain transfer effects. For this reason it is preferred to use solvents with are perfluorinated. For "perfluorinated solvent" in the case of non polymeric solvents (e.g. perlfuoalkanes) it is intended a solvent wherein all the hydrogen atoms in the molecule are replaced by fluorine atoms. In the case of polymeric solvents (such as perfluoropolyethers) for perfluorinated solvent it is intended a solvent wherein at least all the hydrogen atoms in the backbone of the polymer are replaced by fluorine atoms, while the chain ends may or may not be fully fluorinated.

All perfluorinated solvents which are commonly used in the manufacturing of fluoropolymers can be employed herein, particularly preferred are perfluoroalkanes, perfluorinated ethers, perfluoropolyether solvents (such as those marketed by Solvay Specialty Polymers S.p.A under the brand name of Galden ^{®}) and perfluoroamines such as perfluorobutylimines sold by 3M under the brand name of Fluorinert ^{®}. Due to their manufacturing process perfluoropolyethers often have a fully fluorinated backbone and partially fluorinated chain ends. Some commercial perfluoropolyether materials are marketed with partially fluorinated chain ends while others have fully fluorinated chain ends. Both classes of perfluoropolyethers are considered "perfluorinated solvents" according to the definition of the present invention and are suitable as fluorinated solvents in the method of the present invention.

Another essential component of the aqueous mixture of the present invention is a free radical initiator. While the choice of the radical initiator is not particularly limited, it is understood that those suitable for the process according to the invention are selected from compounds capable of initiating and/or accelerating the polymerization process.

Inorganic radical initiators may be used and include, but are not limited to, persulfates such as sodium, potassium and ammonium persulfates, permanganates such as potassium permanganate.

Also, organic radical initiators may be used and include, but are not limited to, the followings: acetylcyclohexanesulfonyl peroxide; diacetylperoxydicarbonate; dialkylperoxydicarbonates such as diethylperoxydicarbonate, dicyclohexylperoxydicarbonate, di-2-ethylhexylperoxydicarbonate; tert-butylperneodecanoate; 2,2'-azobis(4-methoxy-2,4dimethylvaleronitrile; tert-butylperpivalate; dioctanoylperoxide; dilauroyl-peroxide; 2,2'-azobis (2,4-dimethylvaleronitrile); tert-butylazo-2-cyanobutane; dibenzoylperoxide; tert-butyl-per-2ethylhexanoate; tert-butylpermaleate; 2,2'-azobis(isobutyronitrile); bis(tert-butylperoxy)cyclohexane; tert-butyl- peroxyisopropylcarbonate; tert-butylperacetate; 2,2'-bis (tert-butylperoxy)butane; dicumyl peroxide; di-tert-amyl peroxide; di-tert-butyl peroxide (DTBP); p-methane hydroperoxide; pinane hydroperoxide; cumene hydroperoxide; and tert-butyl hydroperoxide.

Other suitable radical initiators notably include halogenated radical initiators such as chlorocarbon based and fluorocarbon based acyl peroxides such as trichloroacetyl peroxide, bis(perfluoro-2-propoxy propionyl) peroxide, [CF₃CF₂CF₂OCF(CF₃)COO]₂ , perfluoropropionyl peroxides, (CF₃CF₂CF₂COO)₂ , (CF₃CF2COO)₂ , {(CF₃CF₂CF₂)-[CF(CF₃)CF₂O]ₘ-CF(CF₃)-COO}₂ wherein m = 0-8, [ClCF₂(CF₂)ₙCOO]₂ , and [HCF₂(CF₂)ₙCOO]₂ wherein n = 0-8; perfluoroalkyl azo compounds such as perfluoroazoisopropane, [(CF₃)₂CFN=]₂, RN=NR¤ , wherein R¤ is a linear or branched perfluorocarbon group having 1-8 carbons; stable or hindered perfluoroalkane radicals such as hexafluoropropylene trimer radical, [(CF₃)₂CF]₂(CF₂CF₂)C• radical and perfluoroalkanes.

Redox systems, comprising at least two components forming a redox couple, such as dimethylaniline-benzoyl peroxide, diethylaniline-benzoyl peroxide and diphenylamine-benzoyl peroxide may also be used as radical initiators to initiate the polymerization process.

Initiators are preferably selected among inorganic peroxides, and in particular, among persulfates.

As said, in the method of the invention, the amount of initiator (O) is of at least 1.50 and at most 100.00 mmol of O₂ per kg of fluoroelastomer (A). Such amount is expressed in terms of mmoles (millimoles) of -O-O- (peroxide) moieties in the said initiator (O), and is representative of the amount of active oxygen atoms which contributes to the creation of radical species.

For any initiator (O) which does not comprise any peroxide moiety, the mmoles of -O-O- (peroxide) moieties in the said initiator (O) can be equally determined based on the decomposition mechanism leading to the creation of radical species; an organic azo group is notably known to decompose with eliminating nitrogen and generating two radical species, and hence it is equivalent, in terms of radical species' creation, to -O-O- (peroxide) moieties.

A further optional component of the aqueous mixture of the present invention is a chain transfer agent. The choice of chain transfer agent is not particularly limited however, since the resulting polymer is a fluoroelastomer it is typically beneficial that a fluoroelastomer includes cure sites so that the fluoroelastomer can be vulcanized.

One way of introducing cure sites in a fluoroelastomer is to create terminal groups of the fluoroelastomer (A) chain including iodine or bromine atoms, preferably iodine. Such iodine and/or bromine chain ends, are obtained, as known in the art, by addition to the polymerization medium during fluoroelastomer manufacture of at least one iodinated/brominated chain transfer agent [agent (CTA-X)]. Said agent (CTA-X) is preferably selected from the group consisting of:
- iodinated and/or brominated organic chain-transfer agent(s); suitable organic chain-transfer agents are typically those of formula R_{f}(I)ₓ(Br)_{y}, in which R_{f} is a (per)fluoroalkyl or a (per)fluorochloroalkyl containing from 1 to 8 carbon atoms, while x and y are integers between 0 and 2, with 1 ≤ x+y ≤ 2 (see, for example, US 4243770 (DAIKIN IND., LTD.) and US 4943622 (NIPPON MEKTRON KK.); and
- alkali metal or alkaline-earth metal iodides and/or bromides, such as described notably in US 5173553 (AUSIMONT SRL.).

This said, preferred agents (CTA-X) are iodinated and/or brominated organic chain-transfer agent(s), more preferably those of formula R_{f}(I)ₓ(Br)_{y}, in which R_{f} is a (per)fluoroalkyl or a (per)fluorochloroalkyl containing from 1 to 8 carbon atoms, while x and y are integers between 0 and 2, with 1 ≤ x+y ≤ 2, and most preferably those of formula R'_{f}(I)_{x'}(Br)_{y'}, in which R'_{f} is a perfluoroalkyl containing from 1 to 8 carbon atoms, while x' and y' are integers between 0 and 2, with 1 ≤ x'+y' ≤ 2, most preferably x' = 2 and y'=0.

In the method of the present invention, agents (CTA-X) which are iodinated are preferred, in particular those of formula R_{f}(I)₂ or R'_{f}(I)₂ with R_{f} and R'_{f} being as above detailed.

As known in the art and already mentioned above, another way of introducing cure sites in a fluoroelastomer is to copolymerize cure site monomers with the required fluoromonomers. In that case, or in case a fluoroelastomer not including cure sites is desired, the method of present invention can be performed without the addition of a chain transfer agent.

When using a chain transfer agent the amount typically used is of from 1 to 100 mmol of I and/or Br per kg of fluoroelastomer.

The aqueous mixture of the present invention also comprises monomers comprising TFE and one or more PAVE monomer, the composition of monomers can be varied during the polymerization process as known to the skilled person and is selected in such a way to obtain the desired fluoroelastomer A comprising 30-85%, preferably 35-75%, more preferably 40-70%, even more preferably 45-65% by moles of recurring units derived from tetrafluoroethylene, and 5-50%, preferably 10-45%, more preferably 15-40%, even more preferably 20-35% by moles of recurring units derived from one or more PAVE monomers as described above.

Preferably the fluoroelastomer A in the latex comprises -CH₂OH chain ends in an amount of zero to less than 10, preferably less than 5 mmol/kg of fluoroelastomer A.

A further step in the process of the present invention is to initiate the polymerization of said monomers. This is typically achieved by putting the monomers and the free radical initiator in contact through a water based reaction medium, typically the mixture described above, maintained in agitation in a sealed reactor at a set pressure and temperature. As common in radical polymerization after the polymerization is initiated monomers and optionally initiator and/or chain transfer agent are typically continuously fed in the reactor until completion of the polymerization reaction so that, at the end of the polymerization process the total amount of free radical initiator and, if present, of chain transfer agent is loaded into the reactor.

Once the polymerization reaction is complete, a stable latex comprising particles of fluoroelastomer A is obtained.

As mentioned above, in the method of the present invention, the polymerization is carried out in the absence of any added fluorinated surfactant.

Examples of fluorinated surfactants which are not used in the present invention are fluorinated surfactants complying with the following formula:

R^{*}-X^{B-}(T⁺)

wherein
R* is a C5-C16 (per)fluoroalkyl chain or a (per)fluoropolyoxyalkylenic chain including one or more than one ethereal oxygen,
X^{B-} is -COO⁻ or -SO₃⁻,
T⁺ is selected from: H⁺, NH₄⁺, and an alkaline metal ion.

Specifically fluorinated surfactants which are used herein are those corresponding to the general formula:

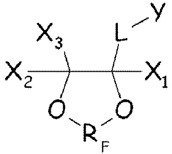

wherein X₁, X₂, X₃, equal or different from each other are independently selected among H, F, and C1-6 (per)fluoroalkyl groups, optionally comprising one or more catenary or non-catenary oxygen atoms; L represents a bond or a divalent group; RF is a divalent fluorinated C1-3 bridging group; Y is a hydrophilic function selected among anionic functionalities, cationic functionalities and non-ionic functionalities.

Exemplary embodiments of fluorinated surfactants which are not added in the method of the present invention are notably: ammonium perfluoro-octanoate; (per)fluoropolyoxy-alkylenes ended with one or more carboxylic groups, optionally salified with sodium, ammonium and alkaline metals; and partially fluorinated alkylsulphonates and compounds of formula: 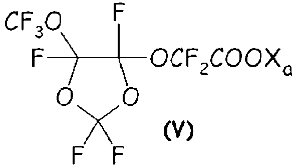 wherein Xa is an alkaline metal or ammonium moiety.

While not preferred, optionally the process of the present invention may be conducted in the presence of one or more non fluorinated surfactant. If used it is preferred that such non fluorinated surfactant is free from sulphur containing groups, such as sulfates and sulfonates surfactants. Such S containing surfactants are non preferred because they can cause a reduced color quality of the resulting fluoroelastomer.

More in general, in order to obtain a better color quality, it is preferred that aqueous mixture of the present invention is essentially free from any compounds containing sulfur atoms considering both surfactants and not surfactant compounds.

If non fluorinated surfactants are present, both anionic, cationic and non-ionic surfactants can be used herein, provided they do not contain fluorine atoms. Preferred surfactants for use herein are anionic and non ionic surfactants, more preferred are non-ionic surfactants and in particular surfactants based on polyethylene glycol (PEG) and polypropylene glycol (PPG) repeating units. Particularly preferred non ionic surfactants are PEG / PPG block copolymers such as those marketed by BASF under the brand PLURONIC ^{®} and by Solvay under the brand name ANTAROX ^{®}.

Typically an effective total amount of non fluorinated surfactant in the aqueous mixture of the present invention is at least from 0.05, preferably from 0.1, more preferably from 0.2 grams per liter of mixture and at most 20, preferably at most 15, more preferably at most 10 grams per liter of mixture.

However, as mentioned above, it is preferred to conduct the process of the present invention in the absence of added non fluorinated surfactants.

Advantageously, the method of the present invention comprises polymerizing TFE with one or more PAVE monomer as defined above, in an aqueous medium.

The method according to the present invention can be preferably performed in continuous, or semi-batch or batch.

The method of the present invention is performed at a temperature that can be selected from the person skilled in the art, notably on the basis of the free radical initiator employed. Preferably, the method of the present invention is performed at a temperature from 40°C to 120°C, more preferably from 50° C to 100°C.

The method of the present invention is preferably performed at a mild pressure between 10 and 60 bars, more preferably from 20 to 55 bars.

As said, another object of the invention is an aqueous latex, free from fluorinated surfactants, comprising one or more fluorinated solvents, preferably one or more perfluorinated solvents, and particles of a fluoroelastomer A, wherein said particles of fluoroelastomer A have an average particle size measured according to ISO 13321 below 800nm, preferably below 600nm, more preferably below 400 wherein:
- the weight ratio between said one or more fluorinated solvent and said water is from 0.1 to 10, preferably from 0,2 to 5, more preferably from 0.3 to 1, even more preferably from 0.5 to 0.8,
and wherein said fluoroelastomer A:
- comprises 30-85%, preferably 35-75%, more preferably 40-70%, even more preferably 45-65% by moles of recurring units derived from tetrafluoroethylene, and 5-50%, preferably 10-45, even more preferably 20-35% by moles of recurring units derived from one or more PAVE
- possesses a Mooney viscosity (ML1+10 (121°C)) of at least 10 MU. Preferably the fluoroelastomer A in the latex comprises -CH₂OH chain ends in an amount of zero to less than 10, preferably less than 5 mmol/kg of fluoroelastomer A.

As said, the fluoroelastomer (A) possesses a Mooney viscosity (ML1+10) at 121°C of at least 10, preferably at least 15, more preferably at least 20 Mooney Unit (MU), when determined according to ASTM D1646; and/or a Mooney Viscosity (ML1+10) at 121°C of at most 120, preferably at most 100, more preferably at most 80 MU. In other terms, the fluoroelastomer (A) is a high molecular weight polymer, and not a fluorowax or a fluororubber of limited molecular weight. Indeed, this is an important feature, as other techniques for making fluororubber without the addition to fluorosurfactants may be failing in providing access to such high molecular weight materials.

In a further step the fluoroelastomer A may be extracted from the latex via coagulation using conventional coagulation techniques for fluoroelastomers such as increasing the ionic strength of the latex adding salts or acids such as aluminum sulfate, nitric acid or mixtures thereof.

The present invention will be now described in more detail with reference to the following examples, whose purpose is merely illustrative and not limitative of the scope of the invention.

### Experimental section

### Materials used

Galden^{®} HT135, TFE, PMVE obtained from Solvay Specialty Polymers Italia S.p.A.
C₄F₈I₂, ammonium persulfate were obtained from Sigma Aldrich.

### Mooney Viscosity:

Mooney viscosity (ML1+10) at 121°C was measured according to ASTM D1646.

### Determination of average particle size

Average particle size of the latex particles is measured via light scattering in accordance to ISO 13321.

### Determination of end groups

End groups were identified and quantified by NMR and/or by infrared spectroscopy according to the method described in PIANCA, M., et al.. J. Fluor. Chem.. 1999, p.95-71. In the table below, the qualification "n.d.'" is used to mean "not detectable", in connection with chain ends which are present in concentration lower than the limit of detection, i.e., lower than 0.05 mmol/Kg.

### Tg

The Tg has been measured via DSC according to ASTM D 3418.

### Example 1

In a 5 L vertical autoclave, equipped with baffles and stirrer working at 650 rpm, were introduced after evacuation: 2,74 L of demineralized water, 0,61 L of fluorinated Solvent Galden^{®} HT135, 1,8 grams of pure C₄F₈I₂ .

The autoclave was then sealed and heated to 85 °C and maintained at such temperature for the entire duration of the reaction. The pressure of the autoclave was increased by 7.5 bar by feeding perfluorinated methyl-vinyl ether (PMVE) monomer. Then a gaseous mixture of Tetrafluoroethylene (TFE) 57% by moles, and PMVE 43% by moles was fed to the autoclave so as to bring the pressure to 21 bar. Then 100ml of a water solution of ammonium persulfate at a concentration of 50g/l were added. After initiation, the TFE/MVE mixture was continuously fed to keep a constant pressure. The polymerization was continued until an overall monomer consumption of 1400g was reached. Then the autoclave was depressurized, vented and cooled.

The resulting latex has an average particle size of 194, is still stable and in a single phase after storage of 30 days at 25°C.

A portion of the latex obtained was then coagulated to extract fluoropolymer crumbs according to the following process:
- In a glass becker 3 liters of demineralized water were heated up to 60°C by a heating plate, then 6 grams of aluminum sulfate [Al₂(SO₄)₃] were added and mixed to complete dissolution and 25 ml of pure nitric acid [HNO₃]. Then 250 ml of latex, obtained according to the procedure described above, were fed in the becker by the use of a dropping funnel stirred by an overhead stirrer. Once all the latex was fed, the solution is left under stirring till the complete coagulation of the polymer. The polymer was then washed with water and dried so to obtain fluoroelastomer crumbs. Mooney viscosity (ML1 +10 (121°C)) of the fluoroelastomer was measured on the dried fluoroelastomer crumbs and was found to be 25 MU.

The resulting fluoroelastomer had 30% mol PMVE and 70% mol TFE. Tg = -7

### Example 2

Same procedure as in Ex. 1 was followed, except that:
- 90ml of a water solution of ammonium persulfate at a concentration of 50g/l were added instead of 100ml.
- 1,5 grams of pure C₄F₈I₂ were used instead of 1.8 grams.

The latex obtained had average particle size 226 nm. Mooney viscosity (ML1+10 (121°C)) of the fluoroelastomer was measured on the dried fluoroelastomer crumbs and was found to be 63 MU.

The resulting fluoroelastomer had 30% mol PMVE and 70% mol TFE. Tg = -5.6.

### Example 3

Same procedure as in Ex. 1 was followed, except that:
- 115ml of a water solution of ammonium persulfate at a concentration of 50g/l were added instead of 100ml.
- 1,3 grams of pure C₄F₈I₂ were used instead of 1.8 grams.

The latex obtained had average particle size 196 nm. Mooney viscosity (ML1+10 (121°C)) of the fluoroelastomer was measured on the dried fluoroelastomer crumbs and was found to be 102 MU.

The resulting fluoroelastomer had 30% mol PMVE and 70% mol TFE. Tg = -5.6.

The method of the present invention allows to obtain fluoroelastomer latexes having low particle size and having outstanding stability without the use of fluorinated surfactants and even without the use of surfactants at all. The Mooney viscosity values obtained confirm that the fluoroelastomers obtained in the present method are suitable for many common applications of fluoroelastomers.

## Claims

1. A method of making a fluoroelastomer [fluoroelastomer A] in an aqueous reaction medium free from fluorinated surfactants, said method comprising:
a: forming a mixture comprising:
i) water
ii) one or more fluorinated solvent, having less than 0.1 mmoles of ionic functional groups per kg of solvent, and preferably being free from ionic functional groups,
iii) a free-radical initiator,
iv) monomers comprising tetrafluoroethylene (TFE) and one or more perfluoroalkylvinylether (PAVE) ,
v) optionally one or more chain transfer agent;
b: initiating the polymerization of said monomers, thereby forming a fluoroelastomer [fluoroelastomer A] as a stable latex,
wherein:
- said mixture is free from fluorinated surfactants
- the weight ratio between said one or more fluorinated solvent and said water is from 0.1 to 10,
- said fluoroelastomer A comprises 30-85% by moles of recurring units derived from tetrafluoroethylene, and 5-50% by moles of recurring units derived from one or more PAVE.

2. The method of claim 1 wherein said fluorinated solvent is a perfluorinated solvent.

3. The method of claim 1 or 2 wherein said fluorinated solvent is selected from perfluorinated alkanes, perfluorinated ethers, perfluoropolyethers, perfluoroamines and mixtures thereof.

4. The method of any preceding claims wherein said PAVE is selected from perfluoromethylvinylether, perfluoroethylvinylether and perfluoropropylvinylether and is preferably perfluoromethylvinylether.

5. The method of any preceding claims wherein said fluoroelastomer A comprises 35-75%, preferably 40-70%, more preferably 45-65% by moles of recurring units derived from TFE and 10-45%, preferably 15-40%, more preferably 20-35% by moles of recurring units derived from one or more PAVE.

6. The method of any preceding claims wherein said fluoroelastomer A comprises 1-50% by moles of recurring units derived from other fluorinated monomers different from TFE and PAVE.

7. The method of any preceding claims wherein said fluoroelastomer A comprises from 0.01% to 5% by moles of units deriving from one or more bis-olefin.

8. The method of any preceding claims wherein said fluoroelastomer A comprises from 0.01% to 5% by moles of units deriving from cure site containing monomers.

9. The method of any preceding claims wherein the weight ratio between said one or more fluorinated solvent and said water is from 0,2 to 5, more preferably from 0.3 to 1, even more preferably from 0.5 to 0.8.

10. The method according to any preceding claim also including the additional step of coagulating said fluoroelastomer A and separating it from said latex as fluoroelastomer crumbs.

11. The method according to any preceding claim wherein said fluoroelastomer A comprises -CH₂OH chain ends in an amount of zero to less than 10 mmol/kg of fluoroelastomer A, preferably less than 5 mmol/kg of fluoroelastomer A, determined according to the method defined in the description.

12. The method according to any preceding claim wherein said mixture comprises one or more chain transfer agent selected from iodine or bromine containing chain transfer agents.

13. An aqueous latex, free from fluorinated surfactants, comprising one or more fluorinated solvent, and particles of a fluoroelastomer A, wherein said particles of fluoroelastomer A have an average particle size, measured according to ISO 13321, below 800nm and wherein:
- the weight ratio between said one or more fluorinated solvent and said water is from 0.1 to 10, preferably from 0,2 to 5, more preferably from 0.3 to 1, even more preferably from 0.5 to 0.8,
and wherein said fluoroelastomer A:
- comprises 30-85%, preferably 35-75%, more preferably 40-70%, even more preferably 45-65% by moles of recurring units derived from tetrafluoroethylene, and 5-50%, preferably 10-45%, more preferably 15-40%, even more preferably 20-35% by moles of recurring units derived from one or more PAVE
- possesses a Mooney viscosity (ML1+10 (121°C)) of at least 10 MU, determined according to the method defined in the description.

14. A latex according to claim 13 wherein said fluoroelastomer A comprises -CH₂OH chain ends in an amount of zero to less than 10 mmol/kg of fluoroelastomer A, preferably less than 5 mmol/kg of fluoroelastomer A.

## Patentansprüche

1. Verfahren zur Herstellung eines Fluorelastomers [Fluorelastomer A] in einem wässrigen, von fluorierten Tensiden freien Reaktionsmedium, wobei das Verfahren umfasst:
a: Bilden eines Gemischs, umfassend:
i) Wasser
ii) ein oder mehrere fluorierte Lösungsmittel mit weniger als 0,1 mmol ionischen funktionellen Gruppen pro kg Lösungsmittel, die vorzugsweise frei von ionischen funktionellen Gruppen sind,
iii) einen Radikalinitiator,
iv) Monomere, umfassend Tetrafluorethylen (TFE) und einen oder mehrere Perfluoralkylvinylether (PAVE),
v) gegebenenfalls ein oder mehrere Kettenübertragungsmittel;
b: Initiieren der Polymerisation der Monomere, wodurch ein Fluorelastomer [Fluorelastomer A] als stabiler Latex gebildet wird,
wobei:
- das Gemisch frei von fluorierten Tensiden ist
- das Gewichtsverhältnis zwischen dem einen oder den mehreren fluorierten Lösungsmitteln und dem Wasser 0,1 bis 10 beträgt,
- das Fluorelastomer A 30-85 Mol-% wiederkehrende Einheiten, die von Tetrafluorethylen abgeleitet sind, und 5-50 Mol-% wiederkehrende Einheiten, die von einem oder mehreren PAVE abgeleitet sind, umfasst.

2. Verfahren nach Anspruch 1, wobei das fluorierte Lösungsmittel ein perfluoriertes Lösungsmittel ist.

3. Verfahren nach Anspruch 1 oder 2, wobei das fluorierte Lösungsmittel aus perfluorierten Alkanen, perfluorierten Ethern, Perfluorpolyethern, Perfluoraminen und Gemischen davon ausgewählt ist.

4. Verfahren nach einem der vorhergehenden Ansprüche, wobei das PAVE aus Perfluormethylvinylether, Perfluorethylvinylether und Perfluorpropylvinylether ausgewählt ist und vorzugsweise Perfluormethylvinylether ist.

5. Verfahren nach einem der vorhergehenden Ansprüche, wobei das Fluorelastomer A 35-75 Mol-%, vorzugsweise 40-70 Mol-%, bevorzugter 45-65 Mol-% wiederkehrende Einheiten, die von TFE abgeleitet sind, und 10-45 Mol-%, vorzugsweise 15-40 Mol-%, bevorzugter 20-35 Mol-% wiederkehrende Einheiten, die von einem oder mehreren PAVE abgeleitet sind, umfasst.

6. Verfahren nach einem der vorhergehenden Ansprüche, wobei das Fluorelastomer A 1-50 Mol-% wiederkehrende Einheiten umfasst, die von anderen fluorierten Monomeren, die sich von TFE und PAVE unterscheiden, abgeleitet sind.

7. Verfahren nach einem der vorhergehenden Ansprüche, wobei das Fluorelastomer A 0,01 Mol-% bis 5 Mol-% Einheiten umfasst, die von einem oder mehreren Bisolefinen abgeleitet sind.

8. Verfahren nach einem der vorhergehenden Ansprüche, wobei das Fluorelastomer A 0,01 Mol-% bis 5 Mol-% Einheiten umfasst, die von Vernetzungsstellen enthaltenden Monomeren abgeleitet sind.

9. Verfahren nach einem der vorhergehenden Ansprüche, wobei das Gewichtsverhältnis zwischen dem einen oder den mehreren fluorierten Lösungsmitteln und dem Wasser 0,2 bis 5, bevorzugter 0,3 bis 1, noch bevorzugter 0,5 bis 0,8 beträgt.

10. Verfahren nach einem der vorhergehenden Ansprüche, ferner umfassend den zusätzlichen Schritt des Koagulierens des Fluorelastomers A und des Abtrennens desselben aus dem Latex als Fluorelastomerkrümel.

11. Verfahren nach einem der vorhergehenden Ansprüche, wobei das Fluorelastomer A - CH₂OH-Kettenenden in einer Menge von null bis weniger als 10 mmol/kg Fluorelastomer A, vorzugsweise weniger als 5 mmol/kg Fluorelastomer A, umfasst, bestimmt gemäß dem in der Beschreibung definierten Verfahren.

12. Verfahren nach einem der vorhergehenden Ansprüche, wobei das Gemisch ein oder mehrere Kettenübertragungsmittel umfasst, die aus iod- oder bromhaltigen Kettenübertragungsmitteln ausgewählt sind.

13. Wässriger, von fluorierten Tensiden freier Latex, umfassend ein oder mehrere fluorierte Lösungsmittel und Teilchen eines Fluorelastomers A, wobei die Teilchen des Fluorelastomers A eine gemäß ISO 13321 gemessene mittlere Teilchengröße von weniger als 800 nm aufweisen und wobei:
- das Gewichtsverhältnis zwischen dem einen oder den mehreren fluorierten Lösungsmitteln und dem Wasser 0,1 bis 10, vorzugsweise 0,2 bis 5, bevorzugter 0,3 bis 1, noch bevorzugter 0,5 bis 0,8 beträgt,
und wobei das Fluorelastomer A:
- 30-85 Mol-%, vorzugsweise 35-75 Mol-%, bevorzugter 40-70 Mol-%, noch bevorzugter 45-65 Mol-% wiederkehrende Einheiten, die von Tetrafluorethylen abgeleitet sind, und 5-50 Mol-%, vorzugsweise 10-45 Mol-%, bevorzugter 15-40 Mol-%, noch bevorzugter 20-35 Mol-% wiederkehrende Einheiten, die von einem oder mehreren PAVE abgeleitet sind, umfasst
- eine Mooney-Viskosität (ML1+10 (121 °C)) von mindestens 10 MU besitzt, bestimmt gemäß dem in der Beschreibung definierten Verfahren.

14. Latex nach Anspruch 13, wobei das Fluorelastomer A -CH₂OH-Kettenenden in einer Menge von null bis weniger als 10 mmol/kg Fluorelastomer A, vorzugsweise weniger als 5 mmol/kg Fluorelastomer A, umfasst.

## Revendications

1. Procédé de fabrication d'un fluoroélastomère [fluoroélastomère A] dans un milieu réactionnel aqueux exempt de tensioactifs fluorés, ledit procédé comprenant :
a: formation d'un mélange comprenant :
i) de l'eau
ii) un ou plusieurs solvants fluorés, ayant moins de 0,1 mmole de groupes fonctionnels ioniques par kg de solvant, et étant de préférence exempts de groupes fonctionnels ioniques,
iii) un initiateur radicalaire,
iv) des monomères comprenant du tétrafluoroéthylène (TFE) et un ou plusieurs perfluoroalkylvinyléthers (PAVE),
v) éventuellement un ou plusieurs agents de transfert de chaîne ;
b: initiation de la polymérisation desdits monomères, formant ainsi un fluoroélastomère [fluoroélastomère A] sous la forme d'un latex stable,
dans lequel :
- ledit mélange est exempt de tensioactifs fluorés
- le rapport pondéral entre lesdits un ou plusieurs solvants fluorés et ladite eau est de 0,1 à 10,
- ledit fluoroélastomère A comprend 30-85 % en moles de motifs récurrents dérivés du tétrafluoroéthylène, et 5-50 % en moles de motifs récurrents dérivés d'un ou plusieurs PAVE.

2. Procédé selon la revendication 1, dans lequel ledit solvant fluoré est un solvant perfluoré.

3. Procédé selon la revendication 1 ou 2, dans lequel ledit solvant fluoré est choisi parmi les alcanes perfluorés, les éthers perfluorés, les perfluoropolyéthers, les perfluoroamines et leurs mélanges.

4. Procédé selon l'une quelconque des revendications précédentes, dans lequel ledit PAVE est choisi parmi le perfluorométhylvinyléther, le perfluoroéthylvinyléther et le perfluoropropylvinyléther, et est de préférence le perfluorométhylvinyléther.

5. Procédé selon l'une quelconque des revendications précédentes, dans lequel ledit fluoroélastomère A comprend 35-75 %, de préférence 40-70 %, plus préférablement 45-65 % en moles de motifs récurrents dérivés du TFE et 10-45 %, de préférence 15-40 %, plus préférablement 20-35 % en moles de motifs récurrents dérivés d'un ou plusieurs PAVE.

6. Procédé selon l'une quelconque des revendications précédentes, dans lequel ledit fluoroélastomère A comprend 1-50 % en moles de motifs récurrents dérivés d'autres monomères fluorés différents du TFE et du PAVE.

7. Procédé selon l'une quelconque des revendications précédentes, dans lequel ledit fluoroélastomère A comprend de 0,01 % à 5 % en moles de motifs dérivés d'une ou plusieurs bis-oléfines.

8. Procédé selon l'une quelconque des revendications précédentes, dans lequel ledit fluoroélastomère A comprend de 0,01 % à 5 % en moles de motifs dérivés de monomères contenant des sites de réticulation.

9. Procédé selon l'une quelconque des revendications précédentes, dans lequel le rapport pondéral entre lesdits un ou plusieurs solvants fluorés et ladite eau est de 0,2 à 5, plus préférablement de 0,3 à 1, encore plus préférablement de 0,5 à 0,8.

10. Procédé selon l'une quelconque des revendications précédentes, comprenant également l'étape supplémentaire consistant à coaguler ledit fluoroélastomère A et à le séparer dudit latex sous forme de miettes de fluoroélastomère.

11. Procédé selon l'une quelconque des revendications précédentes, dans lequel ledit fluoroélastomère A comprend des extrémités de chaîne -CH₂OH en une quantité allant de zéro à moins de 10 mmol/kg de fluoroélastomère A, de préférence inférieure à 5 mmol/kg de fluoroélastomère A, déterminée selon la méthode définie dans la description.

12. Procédé selon l'une quelconque des revendications précédentes, dans lequel ledit mélange comprend un ou plusieurs agents de transfert de chaîne choisis parmi les agents de transfert de chaîne contenant de l'iode ou du brome.

13. Latex aqueux, exempt de tensioactifs fluorés, comprenant un ou plusieurs solvants fluorés, et des particules d'un fluoroélastomère A, dans lequel lesdites particules de fluoroélastomère A ont une taille moyenne de particules, mesurée selon la norme ISO 13321, inférieure à 800 nm et dans lequel :
- le rapport pondéral entre lesdits un ou plusieurs solvants fluorés et ladite eau est de 0,1 à 10, de préférence de 0,2 à 5, plus préférablement de 0,3 à 1, encore plus préférablement de 0,5 à 0,8,
et dans lequel ledit fluoroélastomère A :
- comprend 30-85 %, de préférence 35-75 %, plus préférablement 40-70 %, encore plus préférablement 45-65 % en moles de motifs récurrents dérivés du tétrafluoroéthylène, et 5-50 %, de préférence 10-45 %, plus préférablement 15-40 %, encore plus préférablement 20-35 % en moles de motifs récurrents dérivés d'un ou plusieurs PAVE
- possède une viscosité Mooney (ML1+10 (121 °C)) d'au moins 10 MU, déterminée selon la méthode définie dans la description.

14. Latex selon la revendication 13, dans lequel ledit fluoroélastomère A comprend des extrémités de chaîne -CH₂OH en une quantité allant de zéro à moins de 10 mmol/kg de fluoroélastomère A, de préférence inférieure à 5 mmol/kg de fluoroélastomère A.
